# FASCICULE DE BREVET EUROPEEN

(11) **EP 3 649 084 B1**
(45) Date de publication et mention de la délivrance du brevet: **14.07.2021**
(21) Numéro de dépôt: 18732088.2
(22) Date de dépôt: 21.06.2018
(51) Int. Cl.: C02F 1/14, B63B 35/32, B63B 35/28, C02F 101/30, C02F 103/08

(54) **SYSTÈME DE DÉPOLLUTION DE MILIEUX AQUATIQUES**
SYSTEM ZUR VERSCHMUTZUNGSKONTROLLE VON WASSERUMGEBUNGEN
SYSTEM FOR POLLUTION CONTROL OF AQUATIC ENVIRONMENTS

(30) Priorité: 06.07.2017 FR 1756396
(43) Date de publication de la demande: 13.05.2020
(73) Titulaire: MATSYA, 75008 Paris (FR)
(72) Inventeur: FAYOLLET, Pierre-Edouard, 75002 Paris (FR); MOULIN, Isabelle, 75008 Paris (FR)
(74) Mandataire: Regimbeau
(86) Numéro de dépôt international: PCT/EP2018/066676
(87) Numéro de publication internationale: WO 2019/007702

(56) Documents cités:
- AU-A4- 2015 100 062
- BE-A7- 1 000 305

## Description

### DOMAINE TECHNIQUE GÉNÉRAL

La présente invention concerne la dépollution de milieux aquatiques.

La présente invention s'applique en particulier à la dépollution des océans.

De nombreux rapports et publications alertent sur une pollution très importante des océans, notamment une pollution à base de matériaux plastiques qui constituent jusqu'à 80% des déchets marins.

On recense notamment cinq principaux gyres océaniques formés, aux points de rencontre de courants maritimes, de gigantesques tourbillons animés par la force de Coriolis, qui amassent et entraînent dans leurs courants des tonnes de déchets constitués pour l'essentiel de matière plastique. Ces gyres océaniques sont assimilés par certains à des continents de matière plastique situés sur les océans. Ils couvrent des surfaces de 1 à 2 millions de km², sur une profondeur atteignant 30 mètres. L'on y trouve des déchets de toutes tailles, allant de pièces de plusieurs mètres à des micro-déchets tels que des paillettes de l'ordre de quelques centaines de microns mètres, par exemple de 300µm.

Ces déchets sont consommés par les oiseaux, les poissons et les mammifères marins. L'on sait qu'ils ne se décomposent que très lentement. Pour une part ils se photodégradent et stagnent sur place, annihilant toute forme de vie in situ. Pour une autre part ils progressent lentement et diffusent leur toxicité dans l'eau et dans la chaîne alimentaire. Ils conduisent donc à terme à une catastrophe écologique. Ils sont également responsables de dégâts considérables sur les navires et ont donc un impact économique considérable.

### ART ANTÉRIEUR

Différentes propositions ont déjà été formulées pour tenter de récupérer ces déchets.

Il a été proposé d'équiper des bateaux de filets pour pêcher les déchets, notamment les déchets plastiques.

Il a également été proposé de s'appuyer sur des bases fixes et de confiner les déchets grâce à des barrages flottants.

D'autres projets sont basés sur un concept d'aspiration.

Le document AU 2015100062 décrit un système flottant de dépollution à base de filtres.

Le document BE 1 000 305 divulgue un appareil de traitement et d'épuration par évaporation d'une matière, notamment d'eau, qui comprend un bac plan situé dans le haut de l'appareil et une matière autoflottante, perméable alvéolée et amovible placée dans le bac à la surface supérieure de la matière à traiter.

A ce jour aucun système ne donne totalement satisfaction pour éliminer les déchets présents dans les mers ou océans.

En particulier les micro-déchets de matière plastique, particules ou paillettes plastiques de petite taille, sont très difficiles à récupérer.

D'une manière générale aucun système connu n'a permis jusqu'ici de gérer correctement la grande diversité de taille et de caractéristiques des déchets.

Aucune proposition ne donne par ailleurs satisfaction en termes d'efficacité et de réalisme financier, ni ne donne satisfaction sur le plan écologique.

Le nettoyage des déchets marins représente donc un chantier titanesque majeur et primordial pour l'écosystème et l'ensemble du monde vivant.

### PRÉSENTATION GÉNÉRALE DE L'INVENTION

Un but de l'invention est de perfectionner l'état de la technique en proposant des moyens plus efficaces pour la dépollution des milieux aquatiques.

Un autre but de l'invention est tout particulièrement de dépolluer les gyres océaniques.

Ces buts sont atteints dans le cadre de la présente invention grâce à un système de dépollution de milieux aquatiques selon la revendication 1, ce système comprenant:
- au moins un plateau adapté pour recevoir et maintenir de l'eau polluée par des déchets, notamment des micro-particules de matières plastiques, tout en autorisant l'évaporation de l'eau,
- des moyens adaptés pour fournir sur le plateau un volume contrôlé d'eau et
- des moyens adaptés pour récupérer les résidus solides présents sur le plateau après évaporation de l'eau,
caractérisé en ce que les moyens de récupération des résidus solides comprennent un film disposé sur la surface du plateau, pour recevoir l'eau polluée, ledit film étant apte à être enroulé ou plié sur lui-même.

Selon d'autres caractéristiques avantageuses de la présente invention :
- Le plateau est une barge flottante.
- Le système comprend une pluralité de plateaux modulaires susceptibles d'être interconnectés.
- Le système comprend un film de recouvrement, par exemple un film plastique, déposé au-dessus des déchets, une fois l'eau évaporée. Ce film de recouvrement peut être distinct du film disposé sur la surface du plateau pour récupérer les résidus solides ou être venu de matière avec ce film de récupération.
- Le fond du plateau n'est pas obligatoirement plan pour faciliter la stratification et la récupération des résidus solides.
- Le système comprend des moyens de récupération de l'eau évaporée.
- Le système comprend des moyens adaptés pour récupérer des matériaux nobles, tels que des métaux précieux, et/ou des composants toxiques, dans les résidus collectés.
- Le système comprend des moyens adaptés pour optimiser les conditions d'évaporation, en favorisant ou contrôlant notamment la ventilation au-dessus des plateaux, ainsi que la température de l'air et/ou de l'eau, l'hygrométrie et la pression.
- Chaque barge ou plateau peut être équipée de moyens d'alimentation électrique.
- Les moyens d'alimentation électrique peuvent être utilisés pour alimenter un réseau de capteurs.
- Les moyens d'alimentation électrique peuvent être utilisés pour activer des équipements prévus pour optimiser l'évaporation.
- Les moyens d'alimentation électrique sont de préférence autonomes à base d'énergie renouvelable, tels que des panneaux solaires et/ou des éoliennes.

L'invention concerne également un procédé de dépollution de milieux aquatiques selon la revendication 14, le procédé comprenant les étapes qui consistent à :
- disposer un film sur la surface d'un plateau,
- fournir sur le plateau, au-dessus du film, un volume contrôlé d'eau polluée par des déchets, notamment des micro-particules de matières plastiques, et
- retirer le film sur lequel sont superposés les déchets après évaporation de l'eau, pour récupérer les résidus solides présents sur le plateau, le film étant enroulé ou plié sur lui-même avant d'être déplacé.

Selon d'autres caractéristiques avantageuses du procédé de la présente invention :
- un film de recouvrement est déposé au-dessus des déchets, une fois l'eau évaporée.
- le procédé comprend un contrôle des paramètres d'évaporation, notamment la ventilation au-dessus du plateau, ainsi que la température de l'air et/ou de l'eau.
- Le procédé comprend plusieurs cycles de remplissage successifs du plateau avec un volume d'eau pollué et d'évaporation de l'eau avant de retirer le film disposé sur la surface du plateau.
- le procédé comprend une étape de fixation des bords du film sous-jacent aux résidus solides avec les bords d'un film de recouvrement après évaporation de l'eau.

### PRÉSENTATION DES FIGURES

D'autres caractéristiques, buts et avantages de la présente invention apparaitront à la lecture de la description détaillée qui va suivre et en regard des dessins annexés, donnés à titre d'exemples non limitatifs et sur lesquels :
- la figure 1 représente un exemple de réalisation d'un système conforme à la présente invention, comprenant un volume d'eau polluée avant évaporation,
- La figure 2 représente le même système après évaporation de l'eau,
- La figure 3 représente le même système après enroulement d'un film de collecte pour faciliter l'évacuation des résidus solides,
- Les figures 4 à 6 représentent trois variantes de réalisation de barges conformes à la présente invention,
- la figure 7 représente une variante de réalisation comprenant des moyens de récupération de l'eau évaporée,
- la figure 8 représente une vue schématique d'un système conforme à une variante de réalisation de la présente invention,
- la figure 9 représente une vue schématique d'un système conforme à une autre variante de réalisation de la présente invention,
- la figure 10 représente une vue schématique d'une pluralité de plateaux ou barges conformes à la présente invention couplés pour assurer une grande surface de traitement,
- la figure 11 représente schématiquement les différentes étapes principales du procédé conforme à l'invention.

### DESCRIPTION DETAILLEE DE L'INVENTION

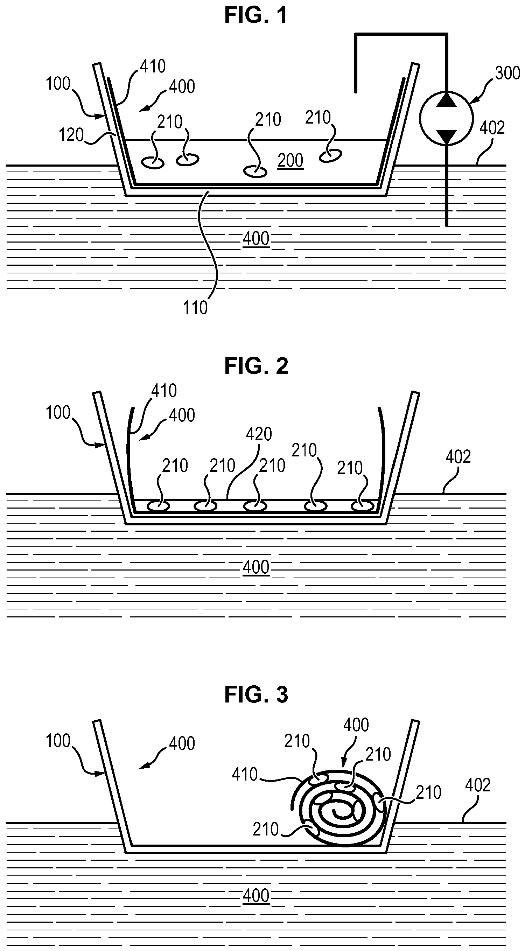

Comme indiqué précédemment la présente invention propose un système pour la dépollution de milieux aquatiques comprenant comme schématisé sur la figure 1 au moins un plateau 100 adapté pour recevoir et maintenir de l'eau 200 polluée par des déchets 210, notamment des micro-particules de matières plastiques, tout en autorisant l'évaporation de l'eau.

Le système conforme à la présente invention comprend également des moyens 300, tels que des moyens de pompage, adaptés pour fournir sur le plateau 100 un volume contrôlé d'eau 200.

On a illustré schématiquement sur la figure 1 une pompe 300 adaptée pour pomper de l'eau polluée dans un milieu 400 et déverser cette eau polluée sur le plateau 100.

Dans le cadre de la présente invention, l'eau polluée 200 peut être déversée sur les plateaux 100 par tout autre moyen approprié, par exemple par un système autonome de pompage, par remplissage via un bateau pompe, par un système de dragueuse dont les godets se déversent au dessus des barges ou encore par pipe line desservant un réseau de barges 100.

Le système conforme à la présente invention comprend de plus des moyens 400 adaptés pour récupérer les résidus solides 210 présents sur le plateau 100 après évaporation de l'eau 200, comme on le voit sur la figure 2.

Selon le mode de réalisation schématisé sur les figures 1 à 3 annexées, ces moyens 400 de récupération des résidus solides 210 comprennent un film 410 disposé sur le fond du plateau 100 avant que la pompe 300 déverse l'eau polluée sur le plateau. Le film 410 est de préférence un film étanche à l'eau. Il peut s'agir d'un film en matière plastique. Il est a minima imperméable aux plus petites particules de déchets 210. Ainsi l'eau polluée 200 recouvre le film 410. Et lorsque l'eau 200 est totalement évaporée, comme schématisé sur la figure 3, les résidus solides 210 peuvent aisément être évacués en retirant le film, en enroulant ou en pliant le film 410 sur lui-même avant de le déplacer, les microparticules de résidus solides étant emprisonnées sur le film 410.

Pour faciliter l'évacuation des résidus solides 210, l'on peut en outre procéder à la pose d'un film de recouvrement , par exemple d'un film plastique, par dessus les déchets 210, une fois l'eau évaporée, comme illustré schématiquement sur la figure 2. Un tel film de recouvrement 420 qui recouvre les résidus solides 210 permet d'éviter que les résidus ne s'envolent et facilite la manutention (notamment par plaques ou par rouleaux).

Le film de recouvrement 420 peut être distinct du film 410 disposé sur la surface du plateau pour récupérer les résidus solides ou être venu de matière avec ce film de récupération 410. Dans ce dernier cas le film de récupération 410 est rabattu sur lui-même, après évaporation de l'eau, pour recouvrir les résidus solides et éviter que ceci ne soient soumis aux intempéries, pluie et vent.

Une fois les films 410, 420 et les résidus 210 évacués, l'on peut réitérer la pose d'un film 410 sur le fond de la barge 100 recevant l'eau polluée 200 et réitérer le remplissage de la barge avec un nouveau volume d'eau polluée.

L'on peut également procéder à plusieurs remplissages de la barge 100 avec un volume d'eau polluée et à l'évaporation de l'eau, avant de retirer le film 410. Les résidus solides s'accumulent ainsi successivement sur le film 410. Les résidus solides déposés successivement après évaporation de chaque remplissage peuvent être recouverts par un film de recouvrement 420 avant chaque nouveau remplissage ou tous les n remplissages, n étant supérieur à 1, voire supérieur à 2.

Le plateau 100 peut faire l'objet de nombreux modes de réalisation.

Il s'agit de préférence d'une barge flottante. On a ainsi illustré schématiquement sur les figures 1 à 3 une barge 400 qui flotte sur un milieu aquatique 400, par exemple un milieu marin. Sur les figures 1 à 3 le niveau d'eau sur lequel flotte la barge 400 est référencé 402.

Chaque barge 100 comprend typiquement un fond 110 entouré de rebords verticaux 120 délimitant un volume adapté.

Selon les figures 1 à 3 le fond des barges 100 est plat.

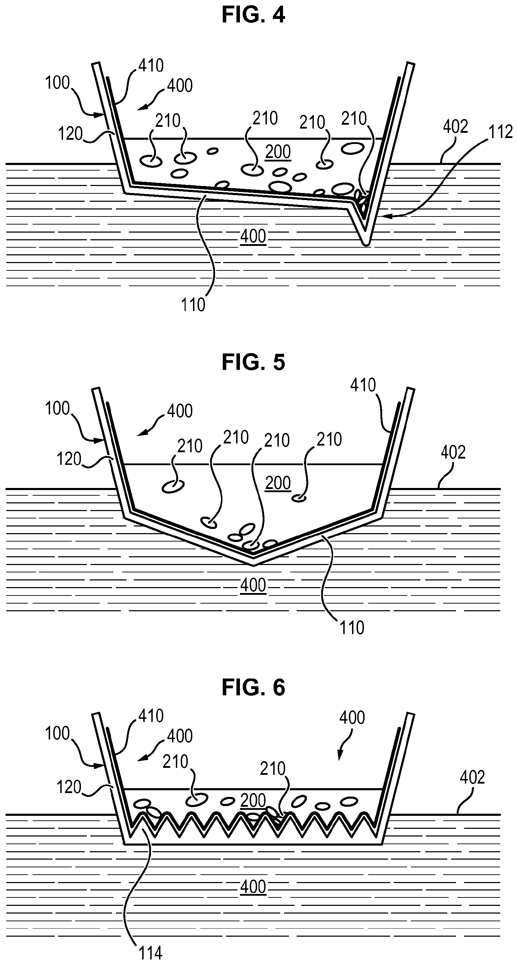

On a représenté sur la figure 4 une variante de réalisation selon laquelle le fond 110 de la barge est incliné vers un bord et présente à ce niveau une cuvette 112 permettant une stratification et une collecte des résidus solides 210.

On a représenté sur la figure 5 une autre variante de réalisation selon laquelle le fond 110 de la barge est également incliné en forme de rigole ou de dièdre concave vers le haut, symétrique par rapport à un plan vertical médian longitudinal P. Cette disposition facilite également une stratification et une collecte des résidus solides 210.

On a représenté sur la figure 6 une autre variante de réalisation selon laquelle le fond 110 de la barge s'étend globalement horizontalement, mais comporte sur sa surface supérieure qui reçoit le film de collecte 410, une série de structures en saillie 114. Il peut s'agir de plots en pyramide ou de nervures longitudinales ou transversales, voire de réseaux de nervures entrecroisées. Cette disposition facilite également une stratification et une collecte des résidus solides 210.

Les résidus solides 210 peuvent ensuite être évacués, stockés et recyclés aisément.

Les différents modes de réalisation de barges conformes à la présente invention sont de préférence flottants et équipés d'un film 410 pour faciliter la récupération des résidus solides 210.

Chaque barge 100 peut elle-même être divisée en plusieurs couloirs parallèles. Cette disposition permet notamment de faciliter la récupération des résidus solides en limitant la largeur des films 410 utilisés pour évacuer les résidus après évaporation de l'eau.

On peut également superposer les plateaux 100.

Les couloirs précités d'assèchement divisant une barge commune 100 peuvent également constituer des bassins cote à cote, en cascade, séparés par des parois filtrantes, filtrant de plus en plus petit. Par exemple le premier bassin peut retenir les déchets de plus grande taille, un deuxième bassin retenir les déchets de taille supérieure à 25 mm, un troisième bassin retenir les déchets de taille comprise entre 25 et 5mm et un quatrième et dernier bassin servir à décanter les paillettes. Le quatrième bassin est de préférence recouvert d'un film, par exemple un film en matière plastique, comme exposé précédemment.

Le système conforme à la présente invention comprend par ailleurs de préférence des moyens permettant de récupérer l'eau évaporée.

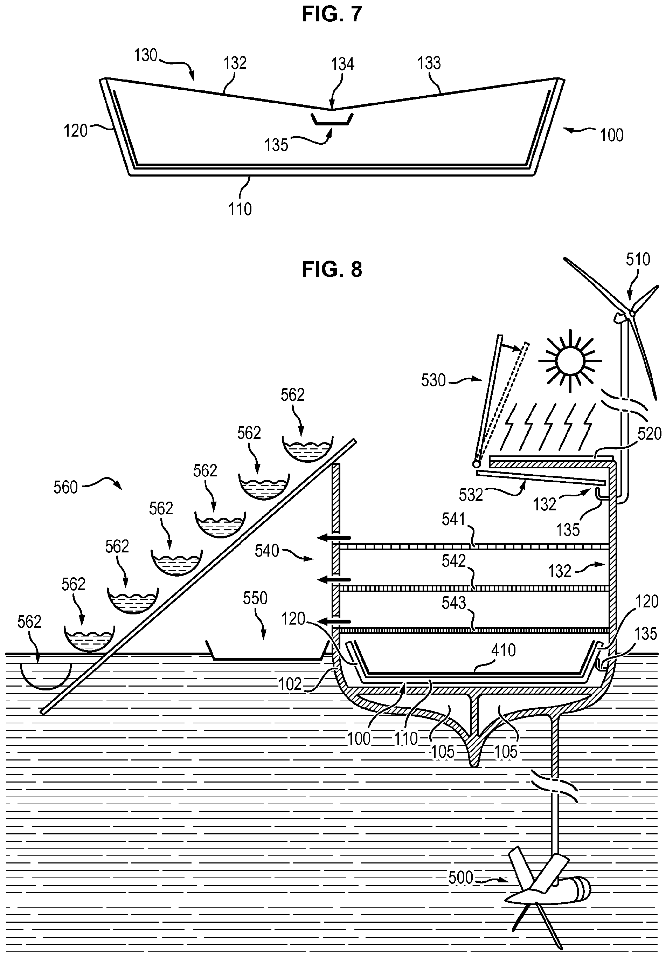

On a ainsi illustré sur la figure 7 annexée une variante de réalisation d'une barge comprenant, en partie supérieure, des plaques de condensation 130 associées à une gouttière de récupération 135. Plus précisément selon la représentation schématique donnée sur la figure 7, il est prévu deux plaques 132 et 133 formant un dièdre convexe vers le bas surplombant le fond de la barge et recouvrant toute la surface de celle-ci. Les deux plaques 132 et 133 convergent et se rejoignent au niveau d'un point bas 134 situé à la verticale de la gouttière 135.

Les plaques de condensation 130 sont de préférence des plaques rafraîchies à une température basse adaptée pour optimiser la condensation.

L'eau 200 s'évapore, se condense sur le plafond formé par les plaques 130 et forme des gouttelettes, qui glissent le long de la petite pente formée par les plaques 130 et tombent dans la gouttière de récupération, légèrement inclinée 135, elle même de préférence raccordée à une citerne ou tout moyen équivalent formant réserve.

En variante les parois verticales ou semi-verticales 120 peuvent également être exploitées pour assurer la condensation de l'eau évaporée. Elles peuvent être équipés de même de plaques rafraîchies. Les gouttes qui se forment sur ces parois, ruissellent et sont récupérées dans une gouttière menant également à une citerne d'eau pure.

Dans le cadre de la présente invention, il est prévu de préférence des moyens de filtrage de l'eau déversée sur le fond des barges en vue d'une séparation ultérieure des résidus déchets solides par évaporation de l'eau.

De préférence, il est ainsi prévu des filtres successifs pour séparer les gros morceaux de déchets et les diriger vers un lieu de récupération sans les faire transiter par les barges d'évaporation.

En amont du point de prélèvement, un premier filtrage peut être opéré par tout moyen approprié, par exemple à l'aide de filets.

Des filtrages additionnels peuvent être opérés dans la barge elle-même. Une option simple est de déverser l'eau polluée sur un système de tamis à plusieurs étages, permettant de filtrer progressivement l'eau de sorte que seuls les petits et très petits déchets, les paillettes, se retrouvent dans le fond de la barge, sur le film de récupération 410.

La solution par tamis permet une récupération facile des déchets « volumineux » pré-triés avant la barge.

Plus précisément le système conforme à la présente invention comprend de préférence une pluralité de plateaux modulaires 100 susceptibles d'être interconnectés mécaniquement et le cas échéant hydrauliquement, afin de couvrir une surface optimisée tout en présentant individuellement un encombrement modéré facilitant les opérations de fabrication, stockage et transport.

Il peut ainsi être prévu différentes barges interconnectées entre elles, dans lesquelles les volumes d'eau sont progressivement déplacés selon le degré d'avancement de l'évaporation de l'eau.

Bien entendu chaque barge 100 peut être formée de plusieurs éléments assemblés in situ.

Le système conforme à la présente invention peut être équipé également de moyens adaptés pour récupérer des matériaux nobles dans les résidus collectés 210, par exemple de métaux précieux, tels que or, platine, rhodium, etc ... voire le cas échéant des composants toxiques, tels que le mercure ou certains hydrocarbures.

L'évaporation de l'eau peut être due uniquement à la ventilation naturelle et à l'ensoleillement qui apporte les calories nécessaires au changement de phase de liquide à vapeur, de l'eau.

Le système conforme à la présente invention peut cependant être équipé en outre de moyens adaptés pour optimiser les conditions d'évaporation, en favorisant ou contrôlant notamment la ventilation au dessus des barges 100, ainsi que la température de l'air et/ou de l'eau 200.

Les barges 100 peuvent ainsi être équipées de ventilateurs.

Elles peuvent également être équipées de moyens de chauffage de l'eau polluée 200, dans le volume, et/ou de moyens de chauffage des parois de fond 110 des barges.

Chaque barge 100 peut être équipée de moyens d'alimentation électrique.

Ces moyens d'alimentation électrique sont de préférence adaptés pour assurer une totale autonomie de la barge ou d'un ensemble de barges.

Ces moyens d'alimentation électrique peuvent être utilisés pour alimenter un réseau de capteurs, par exemple un réseau de capteurs permettant de mesurer la température de l'eau 200 dans chaque barge, la température de l'air intérieur dans chaque barge, la température de l'air à l'extérieur de chaque barge et le degré d'humidité dans chaque barge et à l'extérieur des barges.

Les moyens d'alimentation électrique peuvent également être utilisés pour activer des équipements prévus pour optimiser l'évaporation. De tels moyens peuvent agir sur le degré d'humidité de l'air, sur une ventilation en surface de l'eau, sur la température de l'eau, sur la température de l'air, sur la pression de l'air au-dessus de l'eau, etc, soit sur tous paramètres permettant d'optimiser l'évaporation de l'eau.

En synthèse les moyens d'alimentation électrique sont de préférence adaptés pour alimenter de manière autonome, l'ensemble des capteurs, des moyens de ventilation, de chauffage, de refroidissement, ainsi que l'ensemble des moyens de signalisation et de traitement de signal équipant les barges.

Il s'agit de préférence de moyens d'alimentation électrique autonomes à base d'énergie renouvelable, tels que des panneaux solaires et/ou des éoliennes et/ou des hydroliennes.

L'on comprendra à la lecture de la description qui précède que la présente invention permet de nettoyer l'eau, de récupérer les micro-déchets de matière plastique et qu'elle constitue un système durable et autonome.

A titre d'exemple non limitatif, pour une barge 100 composée de 4 couloirs d'assèchement parallèles de 50m de long et 4m de large chacun, l'on peut pomper 40 000 litres (40m3) pour recouvrir le fond de chaque couloir de 5cm d'eau polluée 200. Une fois l'eau évaporée, on renouvelle l'opération jusqu'à obtenir la quantité de déchets souhaitée, avant de retirer ces derniers.

Avec des données moyennes (eau à 20°C, air à 25°C, hygrométrie à 50% et vent à 1m/s) on obtient un débit d'évaporation de 6,5 litres/jour/m² soit 5200 l/jour/barge (si on considère une barge longue de 50m constituée de 4 couloirs de 4m de large) et cela sans aucun apport énergétique autre que l'énergie fournie par la barge elle-même.

En considérant une hauteur de 2cm de micros-déchets récoltés tous les dix jours. Chaque barge de 50m x 4m x 4 couloirs permet de récupérer 16m³ de micros-déchets tous les dix jours (50m x 4m x 4 = 800m², et 800 x 0,02m = 16m³). Par ailleurs la même barge, équipée d'un système de récupération de l'eau évaporée, permet de fournir 52m³ d'eau pure sur la même période de dix jours.

Des études ont montré que les gyres présentent une stratification, c'est-à-dire que les déchets s'accumulent sur des couches de hauteurs différentes, sous le niveau de la mer, selon la taille moyenne de ces déchets. Vu cette stratification des gyres, dans le cadre de l'invention il est prévu de préférence un captage sélectif à des profondeurs contrôlées sous le niveau de la mer, afin de réduire les besoins de filtration (que ce soit par bateau pompe annexe, par captage ou tout autre moyen). En d'autres termes, dans le cadre de la présente invention, de préférence la profondeur et le déploiement de la pompe de prélèvement est piloté par la barge elle-même. L'on peut ainsi assurer le prélèvement de l'eau polluée au niveau d'une strate contenant essentiellement des déchets de matière plastique de type paillette, c'est-à-dire des particules d'une taille inférieure à quelques centaines de microns mètres, par exemple inférieure ou égale à 300µm.

De préférence l'intérieur des barges est sombre pour éviter la prolifération d'algues.

On a représenté sur la figure 8 une variante de réalisation d'une barge qui comprend :
- une structure de base flottante 102, équipée de ballasts 105 et dont le fond est de préférence chauffé à une température contrôlée pour optimiser l'évaporation de l'eau, qui reçoit
- un bac d'évaporation 100 comprenant un fond 110 entouré de rebords verticaux ou globalement verticaux 120 délimitant un volume adapté,
- un film 410 déposé sur le fond 110 avant le déversement de l'eau polluée 200 à évaporer, pour récupérer les résidus solides 210,
- une hydrolienne 500 de préférence réglable en profondeur,
- au moins une éolienne 510,
- au moins un panneau solaire photovoltaïque 520,
- des plaques 132 de condensation et de récupération de l'eau évaporée, formées par exemple sur les flancs de la structure 102 et de préférence rafraîchies à une température optimale pour favoriser la condensation,
- des gouttières 135 de récupération de l'eau prévues à la base des plaques 132,
- un toit 530, de préférence ouvrant entre une position d'ouverture totale et une position de fermeture totale, ainsi qu'entre toute position intermédiaire possible entre la position ouverte et la position fermée. Le toit 530 peut être muni également de plaques 132 de condensation et de récupération de l'eau évaporée. Ces plaques 132 sont de préférence inclinées pour permettre de récupérer l'eau par ruisselement,
- un ensemble 540 de tamis superposé au bac d'évaporation et qui comprend une pluralité de tamis superposés verticalement et possédant un calibre de filtrage progressivement plus fin en approchant le volume d'eau stockée, pour éliminer progressivement les déchets, le tamis supérieur éliminant les déchets de plus grande taille et le tamis inférieur éliminant les déchets de plus petite taille devant être retirés avant de déverser l'eau contenant les paillettes de plastique dans la barge, pour isoler ensuite ces paillettes par évaporation de l'eau. On a ainsi illustré sur la figure 8 un ensemble de 3 tamis 541, 542 et 543. Le tamis supérieur 541 retient les déchets de plus grande dimension. Le tamis médian 542 retient les déchets de taille intermédiaire. Le tamis inférieur 543 retient les déchets de plus petite taille. De préférence ces tamis sont montés à coulissement horizontal sur une structure support pour être déplaçable à la façon de tiroirs, pour permettre de déverser régulièrement les déchets collectés dans un conteneur de récupération adapté 550,
- une dragueuse 560 possédant des godets 562 de prélèvement et d'acheminement de l'eau polluée sur les tamis 540. La dragueuse est de préférence adaptée pour prélever l'eau polluée, dans un gyre, à une profondeur réglable, afin d'optimiser le point de prélèvement.

Le cas échéant la structure de base flottante 102 peut recevoir une pluralité de bacs d'évaporation 100 disposés cote à cote.

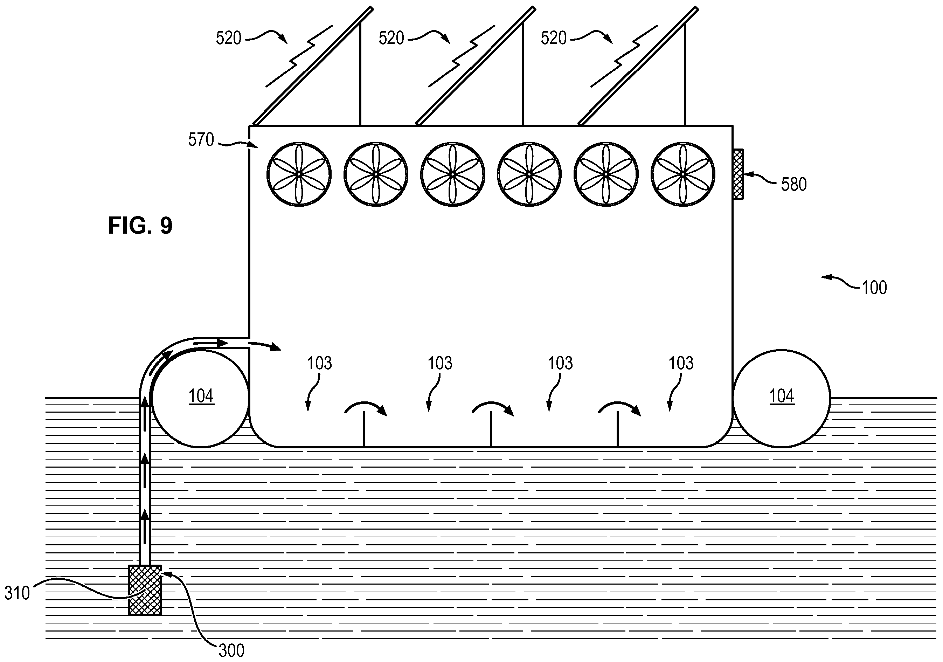

On a représenté sur la figure 9 une variante de réalisation d'une barge divisée en 4 couloirs d'évaporation 103 qui comprend :
- un ensemble de flotteur/stabililsateur 104 solidaire de la structure de base de la barge 100,
- un ensemble de pompage 300 comprenant une pompe associée à un filtre 310 adapté pour éviter que les déchets de grandes dimensions ne soient aspirés par la pompe,
- un ensemble de panneaux solaire photovoltaïques 520 pour l'alimentation de l'ensemble des équipements électriques de la barge,
- un ensemble 570 assurant des fonctions de ventilation/chauffage, associé à un extracteur d'air 580.

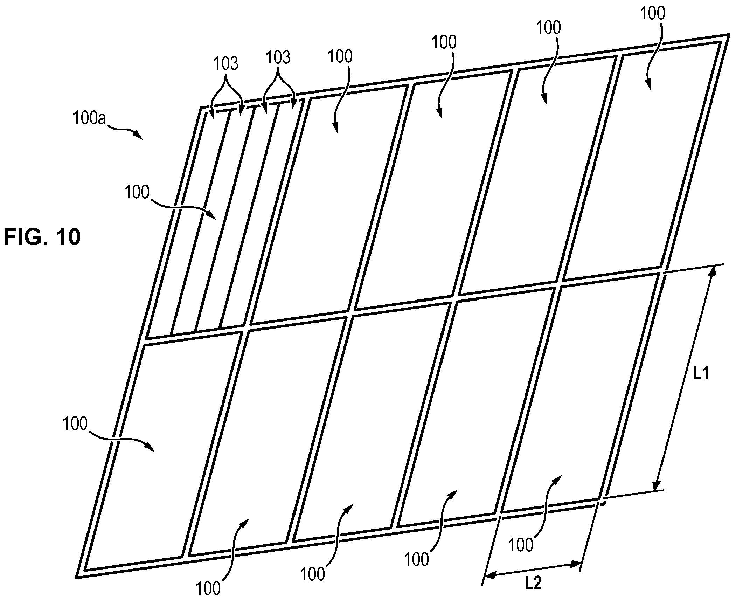

La figure 10 représente schématiquement un ensemble de barges interconnectées.

On a représenté schématiquement sur la figure 10 un ensemble donné uniquement à titre illustratif et non limitatif de 10 barges 100 reliées mécaniquement sous forme d'une matrice de 2 rangées x 5 colonnes. Chaque barge 100 possède par exemple une longueur L1 de l'ordre de 50m et une largeur L2 de l'ordre de 20m. Certaines au moins des barges, comme illustré pour la barge 100a, peuvent être divisées en plusieurs couloirs d'évaporation parallèles 103, par exemple 4 couloirs 103 d'une longueur L1 de l'ordre de 50m et une largeur individuelle de l'ordre de 4 à 5 m. Dans ce cas il peut être prévu des moyens permettant de déverser progressivement l'eau d'un couloir 103 vers un autre couloir 103 adjacent présentant une concentration d'eau plus faible, pour optimiser l'évaporation de l'eau.

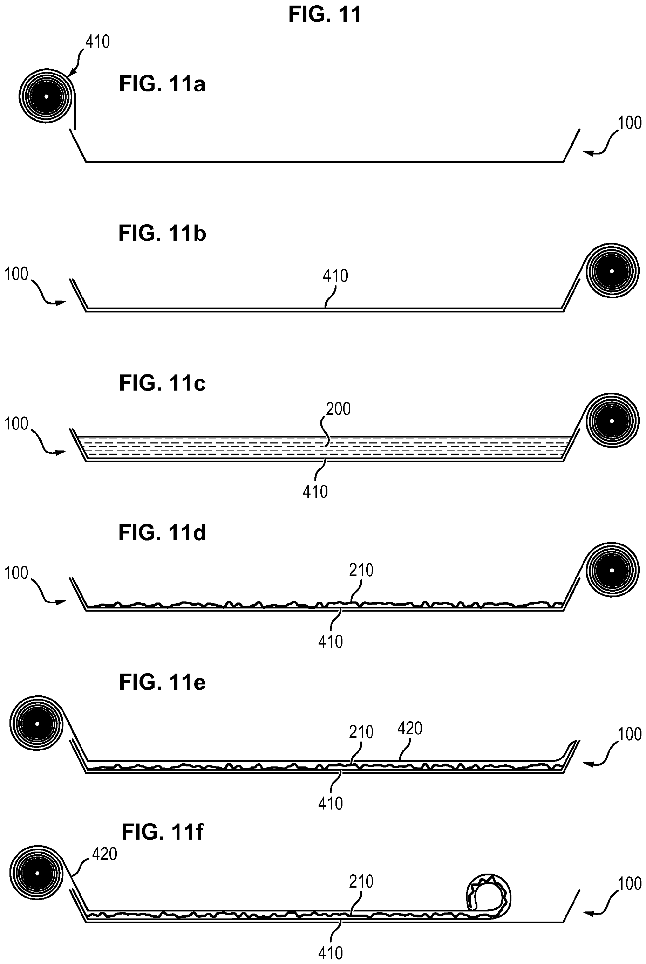

La figure 11 représente schématiquement les différentes étapes du procédé conforme à l'invention.

On distingue sur la figure 11 :
- une étape 1 qui consiste à présenter un film 410 en regard d'un plateau 100 (figure 11a),
- une étape 2 qui consiste à dérouler le film 410 sur le fond du plateau 100 pour recouvrir celui-ci (figure 11b),
- une étape 3 qui consiste à remplir le plateau 100 en eau polluée 200 (figure 11c),
- une étape 4 qui schématise l'évaporation de l'eau 200 (figure 11d),
- une étape 5 de recouvrement des résidus solides à l'aide d'un film de recouvrement 420 après l'évaporation de l'eau 200 (figure 11e), et
- une étape 6 d'élimination des résidus solides par retrait du film 410 (figure 11f).

Le procédé conforme à l'invention peut ensuite être réitéré à partir de l'étape 1 schématisé sur la figure 11a.

Bien entendu la présente invention n'est pas limitée aux modes de réalisation qui viennent d'être décrits, mais s'étend à toutes variantes couvertes par les revendications annexées.

En particulier la présente invention n'est pas limitée à la dépollution des mers ou océans. Elle peut s'appliquer à tout milieu aquatique.

En variante les plateaux 100 peuvent être placés non pas sur une barge flottante, mais sur terre. Ils peuvent par ailleurs être intégrés en tout lieu approprié, par exemple notamment mais non exclusivement dans tout système véhiculant un volume liquide susceptible d'être pollué par des microparticules, notamment des microparticules de matière plastique ou synthétiques, par exemple dans des milieux industriels, laveries, teintureries, voire même dans des appareils domestiques, notamment des appareils de lavage domestiques, ou encore au niveau des systèmes de récupération des eaux s'écoulant sur des chaussées, par exemple en bord de routes et d'autoroutes pour récupérer les particules arrachés aux pneumatiques de véhicules.

Dans ce contexte pour des installations terrestres on peut prévoir des appareils intégrant une pluralité de panneaux 100 juxtaposés verticalement et/ou horizontalement en nombre et de taille adaptée au volume d'eau à traiter.

Pour empêcher les fuites de microparticules une fois l'eau évaporée et le film de recouvrement 420 posé, on peut maintenir les films 410 et 420 hermétiquement clos, grâce à une étape de fixation des bords du film 410 sous-jacent aux résidus solides avec les bords d'un film de recouvrement 420, par tous moyens appropriés, par exemple par soudure thermique des bords des films 410 et 420 entre eux, collage des bords des films 410 et 420 entre eux, fixation des bords des films 410 et 420 entre eux par tous moyens tels que des moyens de fermeture à glissière ou à l'aide de moyens complémentaires de type velours/crochet ou par recouvrement des films 410 et 420 entre eux grâce à des rabats.

Le système conforme à la présente invention comprend de préférence des moyens adaptés pour mesurer et contrôler le niveau d'eau et de déchets solides accumulés pour contrôler des cycles automatiques de remplissage en eau polluée et/ou d'évacuation des résidus solides.

## Revendications

1. Système de dépollution de milieux aquatiques comprenant :
• au moins un plateau (100) adapté pour recevoir et maintenir de l'eau polluée par des déchets, notamment des micro-particules de matières plastiques, tout en autorisant l'évaporation de l'eau,
• des moyens (300) adaptés pour fournir sur le plateau un volume contrôlé d'eau et
• des moyens (410) adaptés pour récupérer les résidus solides (210) présents sur le plateau (100) après évaporation de l'eau,
**caractérisé en ce que** les moyens de récupération des résidus solides comprennent un film (410) disposé sur la surface du plateau, pour recevoir l'eau polluée, ledit film étant apte à être enroulé ou plié sur lui-même.

2. Système selon la revendication 1, **caractérisé en ce que** le plateau (100) est une barge flottante.

3. Système selon l'une des revendications 1 ou 2, **caractérisé en ce que** le système comprend une pluralité de plateaux (100) modulaires susceptibles d'être interconnectés.

4. Système selon l'une des revendications 1 à 3, **caractérisé en ce que** le système comprend un film (420) de recouvrement déposé au-dessus des déchets, une fois l'eau évaporée.

5. Système selon la revendication 4, **caractérisé en ce que** le film (420) de recouvrement est venu de matière avec le film (410) disposé sur la surface du plateau.

6. Système selon la revendication 4, **caractérisé en ce que** le film (420) de recouvrement est séparé du film (410) disposé sur la surface du plateau.

7. Système selon l'une des revendications 1 à 6, **caractérisé en ce que** le fond (110) du plateau n'est pas plan pour faciliter la stratification et la récupération des résidus solides.

8. Système selon l'une des revendications 1 à 7, **caractérisé en ce que** le système comprend des moyens (130, 135) de récupération de l'eau évaporée.

9. Système selon l'une des revendications 1 à 8, **caractérisé en ce que** le système comprend des moyens adaptés pour optimiser les conditions d'évaporation, en favorisant ou contrôlant notamment la ventilation au-dessus des plateaux, ainsi que la température de l'air et/ou de l'eau.

10. Système selon l'une des revendications 1 à 9, **caractérisé en ce que** chaque plateau (100) est équipé de moyens d'alimentation électrique.

11. Système selon l'une des revendications 1 à 10, **caractérisé en ce qu'**il comprend des moyens d'alimentation électrique pour alimenter un réseau de capteurs.

12. Système selon l'une des revendications 1 à 11, **caractérisé en ce qu'**il comprend des moyens d'alimentation électrique pour activer des équipements prévus pour optimiser l'évaporation.

13. Système selon l'une des revendications 1 à 12, **caractérisé en ce qu'**il comprend des moyens d'alimentation électrique autonomes à base d'énergie renouvelable, tels que des panneaux solaires et/ou des éoliennes.

14. Procédé de dépollution de milieux aquatiques comprenant les étapes qui consistent à :
• disposer un film (410) sur la surface d'un plateau,
• fournir sur le plateau (100), au-dessus du film (410), un volume contrôlé d'eau polluée par des déchets, notamment des micro-particules de matières plastiques, et
• retirer le film (410) sur lequel sont superposés les déchets après évaporation de l'eau, pour récupérer les résidus solides (210) présents sur le plateau (100), en enroulant ou en pliant le film sur lui-même avant de le déplacer.

15. Procédé selon larevendication 14, **caractérisé par le fait qu'**un film (420) de recouvrement est déposé au-dessus des déchets, une fois l'eau évaporée.

16. Procédé selon l'une des revendications 14 à 15, **caractérisé par le fait qu'**il comprend un contrôle des paramètres d'évaporation, notamment la ventilation au-dessus du plateau, ainsi que la température de l'air et/ou de l'eau.

17. Procédé selon l'une des revendications 14 à 16, **caractérisé par le fait qu'**il comprend plusieurs cycles de remplissage successifs du plateau (100) avec un volume d'eau pollué et d'évaporation de l'eau avant de retirer le film (410) disposé sur la surface du plateau.

18. Procédé selon l'une des revendications 14 à 17, **caractérisé par le fait qu'**il comprend une étape de fixation des bords du film (410) sous-jacent aux résidus solides avec les bords d'un film de recouvrement (420) après évaporation de l'eau.

## Patentansprüche

1. System zur Reinigung aquatischer Umgebungen, umfassend:
- mindestens eine Schale (100) zum Aufnehmen und Halten von durch Abfälle, insbesondere Mikropartikel aus Kunststoff, verunreinigtem Wasser, wobei sie das Wasser verdunsten lässt,
- Mittel (300) zum Zuführen eines kontrollierten Wasservolumens zu der Schale und
- Mittel (410) zum Rückgewinnen der auf der Schale (100) nach dem Verdunsten des Wassers vorhandenen festen Rückstände (210),
**dadurch gekennzeichnet, dass** die Mittel zum Rückgewinnen der festen Rückstände eine Folie (410) umfassen, die auf der Oberfläche der Schale angeordnet ist, um das verschmutzte Wasser aufzunehmen, wobei sich die Folie aufrollen oder zusammenfalten lässt.

2. System nach Anspruch 1, **dadurch gekennzeichnet, dass** die Schale (100) ein schwimmender Frachtkahn ist.

3. System nach einem der Ansprüche 1 oder 2, **dadurch gekennzeichnet, dass** das System eine Vielzahl von modularen Schalen (100) umfasst, die miteinander verbunden werden können.

4. System nach einem der Ansprüche 1 bis 3, **dadurch gekennzeichnet, dass** das System eine Abdeckfolie (420) umfasst, die über die Abfälle gelegt wird, sobald das Wasser verdunstet ist.

5. System nach Anspruch 4, **dadurch gekennzeichnet, dass** die Abdeckfolie (420) aus demselben Material besteht wie die Folie (410), die auf der Oberfläche der Schale angeordnet ist.

6. System nach Anspruch 4, **dadurch gekennzeichnet, dass** die Abdeckfolie (420) von der Folie (410) getrennt wird, die auf der Oberfläche der Schale angeordnet ist.

7. System nach einem der Ansprüche 1 bis 6, **dadurch gekennzeichnet, dass** der Boden (110) der Schale nicht eben ist, um die Schichtung und Rückgewinnung der festen Rückstände zu erleichtern.

8. System nach einem der Ansprüche 1 bis 7, **dadurch gekennzeichnet, dass** das System Mittel (130, 135) umfasst zur Rückgewinnung des verdunsteten Wassers.

9. System nach einem der Ansprüche 1 bis 8, **dadurch gekennzeichnet, dass** das System Mittel zum Optimieren der Verdunstungsbedingungen umfasst, insbesondere durch Förderung oder Steuerung der Belüftung über den Schalen, sowie der Luft- und/oder Wassertemperatur.

10. System nach einem der Ansprüche 1 bis 9, **dadurch gekennzeichnet, dass** jede Schale (100) mit Stromversorgungsmitteln ausgerüstet ist.

11. System nach einem der Ansprüche 1 bis 10, **dadurch gekennzeichnet, dass** es Stromversorgungsmittel für die Versorgung einer Sensoranordnung umfasst.

12. System nach einem der Ansprüche 1 bis 11, **dadurch gekennzeichnet, dass** es Stromversorgungsmittel für die Aktivierung der Einrichtungen umfasst, die zur Optimierung der Verdunstung vorgesehen sind.

13. System nach einem der Ansprüche 1 bis 12, **dadurch gekennzeichnet, dass** es autonome Stromversorgungsmittel auf der Grundlage erneuerbarer Energie, wie Sonnenkollektoren und/oder Windturbinen, umfasst.

14. Verfahren zur Reinigung aquatischer Umgebungen, umfassend die folgenden Schritte:
- Anordnen einer Folie (410) auf der Oberfläche einer Schale,
- Zuführen zu der Schale (100), über der Folie (410), eines kontrollierten Wasservolumens, das durch Abfälle, insbesondere Mikropartikel aus Kunststoff, verunreinigt ist, und
- Entfernen der Folie (410), auf der die Abfälle nach dem Verdunsten des Wassers aufliegen, um die festen Rückstände (210) zurückzugewinnen, die auf der Schale (100) vorhanden sind, durch Aufrollen oder Zusammenfalten der Folie, bevor sie bewegt wird.

15. Verfahren nach Anspruch 14, **dadurch gekennzeichnet, dass** eine Abdeckfolie (420) über die Abfälle gelegt wird, sobald das Wasser verdunstet ist.

16. Verfahren nach einem der Ansprüche 14 bis 15, **dadurch gekennzeichnet, dass** es eine Steuerung der Verdunstungsparameter umfasst, insbesondere der Belüftung über den Schalen, sowie der Luft- und/oder Wassertemperatur.

17. Verfahren nach einem der Ansprüche 14 bis 16, **dadurch gekennzeichnet, dass** es mehrere aufeinander folgende Zyklen umfasst, in denen die Schale (100) mit einem Volumen an verschmutztem Wasser gefüllt wird und das Wasser verdunstet, bevor die Folie (410) entfernt wird, die auf der Oberfläche der Schale angeordnet ist.

18. Verfahren nach einem der Ansprüche 14 bis 17, **dadurch gekennzeichnet, dass** es einen Schritt des Fixierens der Ränder der Folie (410), die unter den festen Rückständen liegt, mit den Rändern einer Abdeckfolie (420) nach der Verdunstung des Wassers umfasst.

## Claims

1. A system for cleaning aquatic environments comprising:
- at least one tray (100) adapted to receive and hold water polluted by waste, notably microplastics, while allowing the water to evaporate,
- means (300) adapted to provide on the tray a controlled volume of water and
- means (410) adapted to recover the solid residues (210) present on the tray (100) after evaporation of the water,
**characterized in that** the means for recovering the solid residues comprises a film (410) placed on the surface of the tray, for receiving the polluted water, said film being able to be rolled or folded on itself.

2. The system as claimed in claim 1, **characterized in that** the tray (100) is a floating barge.

3. The system as claimed in one of claims 1 or 2, **characterized in that** the system comprises a plurality of modular trays (100) capable of being interconnected.

4. The system as claimed in one of claims 1 to 3, **characterized in that** the system comprises a covering film (420) placed over the waste, once the water has evaporated.

5. The system as claimed in claim 4, **characterized in that** the covering film (420) is integral with the film (410) placed on the surface of the tray.

6. The system as claimed in claim 4, wherein the covering film (420) is separated from the film (410) placed on the surface of the tray.

7. The system as claimed in one of claims 1 to 6, **characterized in that** the bottom (110) of the tray is not flat to facilitate stratification and recovery of solid residues.

8. The system as claimed in one of claims 1 to 7, **characterized in that** the system comprises means (130, 135) for recovering evaporated water.

9. The system as claimed in one of claims 1 to 8, **characterized in that** the system comprises means adapted to optimize the evaporation conditions, in particular by promoting or controlling the ventilation above the trays, as well as the air and/or water temperature.

10. The system as claimed in one of claims 1 to 9, **characterized in that** each tray (100) is equipped with power supply means.

11. The system as claimed in one of claims 1 to 10, **characterized in that** it comprises power supply means for supplying power to a sensor network.

12. The system as claimed in one of claims 1 to 11, **characterized in that** it comprises power supply means for activating equipment provided for optimizing evaporation.

13. The system as claimed in one of claims 1 to 12, **characterized in that** it comprises autonomous power supply means based on renewable energy, such as solar panels and/or wind turbines.

14. A process for cleaning aquatic environments comprising the steps of:
- placing a film (410) on the surface of a tray,
- providing on the tray (100), above the film (410), a controlled volume of water polluted by waste, in particular microplastics, and
- removing the film (410) on which the waste is superimposed after evaporation of the water, to recover the solid residues (210) present on the tray (100), by rolling or folding the film on itself before moving it.

15. The process as claimed in claim 14, **characterized in that** a covering film (420) is placed over the waste, once the water has evaporated.

16. The process as claimed in one of claims 14 to 15, **characterized in that** it comprises a control of the evaporation parameters, notably the ventilation above the tray, as well as the air and/or water temperature.

17. The process as claimed in one of claims 14 to 16, **characterized in that** it comprises several successive cycles of filling the tray (100) with a volume of polluted water and evaporating the water before removing the film (410) placed on the surface of the tray.

18. The process as claimed in one of claims 14 to 17, **characterized in that** it comprises a step of fixing the edges of the film (410) underlying the solid residues with the edges of a covering film (420) after evaporation of the water.
